# EUROPÄISCHE PATENTANMELDUNG

(11) **EP 1 739 985 A1**
(43) Veröffentlichungstag der Anmeldung: **03.01.2007**
(21) Anmeldenummer: 05105929.3
(22) Anmeldetag: 30.06.2005
(51) Int. Cl.: H04Q 7/22

(54) **Verfahren zur ortsabhängigen Wiedergabe von über ein Telekommunikationsnetz mittels Datenpaket-Übertragung abgerufenen individualisierten Unterhaltungsprogrammen**

(71) Anmelder: Smit, Michael, 51491 Overath (DE)
(72) Erfinder: Smit, Michael, 51491 Overath (DE)
(74) Vertreter: Hilleringmann, Jochen

(57) **Zusammenfassung**

Die Erfindung betrifft ein Verfahren zur ortsabhängigen Wiedergabe von über ein Telekommunikationsnetz mittels Datenpaket-Übertragung abgerufenen individualisierten Unterhaltungsprogrammen, bei dem die Unterhaltungsprogramme mit für verschiedene Orte innerhalb eines Gebiets spezifischen Inhalten durch eine Telekommunikationsempfangsvorrichtung von einer Telekommunikationssendevorrichtung mittels Datenpaket-Übertragung abgerufen und in der Telekommunikationsempfangsvorrichtung gespeichert werden, der augenblickliche Ort der Empfangsvorrichtung innerhalb des Gebiets ermittelt wird und von der Telekommunikationsempfangsvorrichtung ein Unterhaltungsprogramm mit für den ermittelten, augenblicklichen Ort der Telekommunikationsempfangsvorrichtung spezifischem Inhalt ausgegeben wird.

## Beschreibung

Die Erfindung betrifft ein Verfahren zur ortsabhängigen Wiedergabe von über ein Telekommunikationsnetz mittels Datenpaket-Übertragung abgerufenen individualisierten Unterhaltungsprogrammen.

Im Rahmen der Besichtigung von beispielsweise Sehenswürdigkeiten wie Museen, historischen Stätten oder dergleichen öffentlichen Plätzen und Regionen ist es üblich, den Teilnehmern über Tonträger-Abspielgeräte zusätzliche Informationen zukommen zu lassen. Die Teilnehmer müssen dabei in das Abspielgerät einen ihren augenblicklichem Standort entsprechenden Code eingeben, woraufhin das Abspielgerät die für diesen Standort relevanten Informationen abspielt. Diese Art der Bedienung des Abspielgeräts wird als lästig empfunden.

Aufgabe der Erfindung ist es, ein Verfahren anzugeben, bei dem individualisierte Informationen auf bequeme Art und Weise und insbesondere automatisch abgespielt werden.

Zur Lösung dieser Aufgabe wird mit der Erfindung ein Verfahren vorgeschlagen, bei dem über ein Telekommunikationsnetz mittels Datenpaket-übertragung individualisierte Unterhaltungsprogramme abgerufen und danach ortsabhängig wiedergegeben werden, wobei
- die Unterhaltungsprogramme mit für verschiedene Orte innerhalb eines Gebiets spezifischen Inhalten durch eine Telekommunikationsempfangsvorrichtung von einer Telekommunikationssendevorrichtung mittels Datenpaket-Übertragung abgerufen und in der Telekommunikationsempfangsvorrichtung gespeichert werden,
- der augenblickliche Ort der Empfangsvorrichtung innerhalb des Gebiets ermittelt wird und
- von der Telekommunikationsempfangsvorrichtung ein Unterhaltungsprogramm mit für den ermittelten, augenblicklichen Ort der Telekommunikationsempfangsvorrichtung spezifischem Inhalt ausgegeben wird.

Nach der Erfindung kann sich also ein "Kunde", d. h. ein Benutzer individuell von einer Telekommunikationssendevorrichtung (beispielsweise einem Server) Unterhaltungsprogramme bzw. Informationen abrufen ("Herunterladen"). Diese Informationen sind spezifisch für einen ebenfalls vom Benutzer ausgewählten Gegenstand (beispielsweise Informationen über eine Stadt, ein Museum, eine Region oder dergleichen). Wenn sich nun der Benutzer innerhalb des Bereichs bewegt, über den er zuvor die Informationen heruntergeladen hat, so wird seine augenblickliche Position innerhalb des Bereichs ermittelt. Entsprechend dem augenblicklich eingenommenen Ort wird dann über die vom Benutzer mitgeführte Telekommunikationsempfangsvorrichtung ortsabhängig Information ausgegeben. Wahlweise kann diese Information automatisch oder auf eine entsprechende Bedienung der Telekommunikationsempfangsvorrichtung hin von dieser ausgegeben werden.

Mit der Erfindung wird ein Verfahren zum Ausgeben und Abhören eines sozusagen nicht linearen Unterhaltungsprogramms auf Anforderung durch die einzelnen Benutzer hin geschaffen. Die gesamte innerhalb einer Datenbank eines Telekommunikationsnetzes gespeicherte Information zu einem bestimmten, vom Benutzer ausgewählten öffentlichen Platz (Museum, Sehenswürdigkeit, Stadt oder Region) wird über das Telekommunikationsnetz mittels Datenpaket-Übertragung auf eine Telekommunikationsempfangsvorrichtung geladen, die der Benutzer oder eine Benutzergruppe mitführt. Neben Informationen über die Sehenswürdigkeit an sich können auch noch weitere für touristische Anwendungen relevante Informationen geladen und abgerufen werden. Hier sei beispielsweise an Informationen zu Restaurants, Einkaufsmöglichkeiten oder dergleichen im Bereich der Sehenswürdigkeit gedacht.

Bei der Telekommunikationsempfangsvorrichtung handelt es sich zweckmäßigerweise um ein Mobiltelefon, dessen Ortsbestimmung zellenbasiert oder mittels GPS erfolgt. Eine weitere Möglichkeit der Positionsbestimmung ist in DE-U-203 04 906 beschrieben.

Während eines Rundgangs, bei dem der das erfindungsgemäße Verfahren nutzende Benutzer einen bestimmten Ort gegebenenfalls mehrfach passiert, würde nach dem erfindungsgemäßen Verfahren jeweils die gleiche Information ausgegeben werden. Unterhaltsamer und für den Benutzer interessanter ist es allerdings, wenn die Telekommunikationsempfangsvorrichtung von der Telekommunikationssendevorrichtung mehrerer Unterhaltungsprogramme mit für mindestens einen der Orte spezifischen, untereinander verschiedenen Inhalten abruft und speichert, wobei die Telekommunikationsempfangsvorrichtung dann, wenn sie sich wiederholt an demselben Ort befindet, jeweils unterschiedliche Unterhaltungsprogramme ausgibt. Mit dieser Art der Informationswiedergabe ist es möglich, einen Benutzer bzw. Besucher einer historischen Stätte in einen dort spielenden Handlungsablauf hinein zu versetzen. Spielt beispielsweise die Handlung mehrfach an ein und demselben Ort, so wird, wenn der Benutzer sich im Rahmen der Handlungsführung an diesem Ort befindet, jeweils eine der Handlung entsprechende Information abgespielt.

Wie bereits zuvor erwähnt, ist es zweckmäßig, wenn die Telekommunikationsempfangsvorrichtung von der Person mitgeführt wird. Es wäre auch denkbar, dass lediglich die Position des Benutzers bzw. der Person innerhalb des Gebiets ermittelt wird, wobei dann über Lautsprecher an den einzelnen Orten die Person, wenn sie sich an diesen Orten befindet, mit der jeweiligen Information akustisch oder auch visuell versorgt wird. Auch ist es denkbar, dass der Benutzer die Information jeweils durch Betätigung der Telekommunikationsempfangsvorrichtung abruft.

Gemäß einer weiteren vorteilhaften Ausgestaltung der Erfindung ist vorgesehen, dass die Telekommunikationsempfangsvorrichtung von der Person zum sequentiellen Ausgehen sämtlicher Unterhaltungsprogramme mit für den augenblicklichen Ort spezifischen Inhalten bedienbar ist, ohne dass die Telekommunikationsempfangsvorrichtung ortsverändert wird.

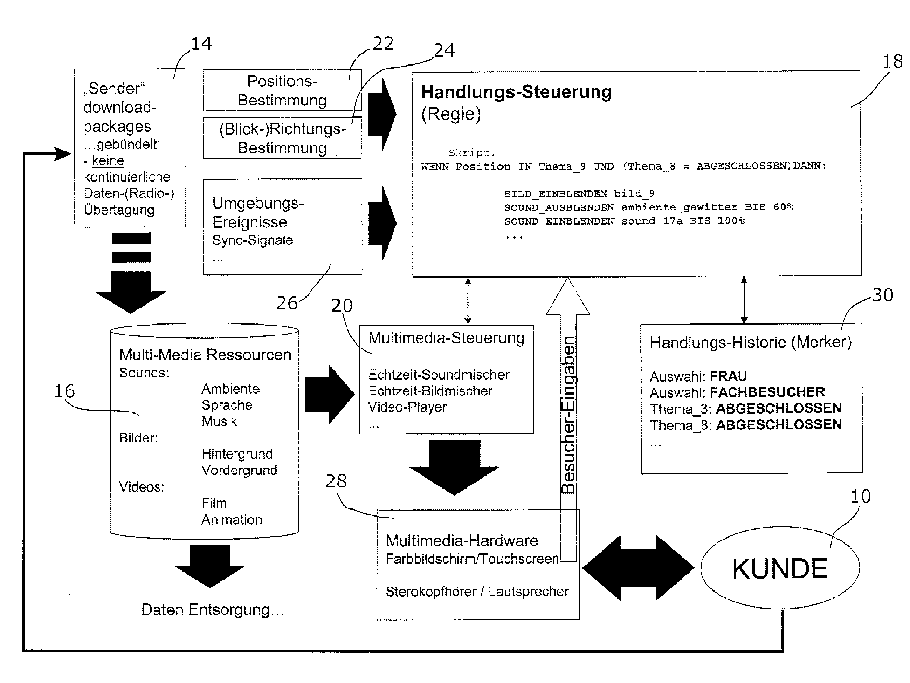

Die dem erfindungsgemäßen Verfahren zugrunde liegende Konzeption der nicht linearen Ausgabe von individualisierten Unterhaltungsprogrammen ist in dem Diagramm der Zeichnung schematisch wiedergegeben.

Ein Benutzer 10 sendet über ein Telekommunikationsnetz 12 an einen Server 14 eine Anforderung bezüglich abzurufender Informationen und Unterhaltungsprogramme. Über den Server 14 wird auf Multi-Media Ressourcen zugegriffen, die in einem Datenspeicher 16 gespeichert sind. Anhand der Multi-Media Ressourcen erfolgt nun in einer Steuereinheit 18 eine HandlungsSteuerung (Regie). Die Steuereinheit 18 ist über eine Multi-Media Steuereinrichtung 20 mit dem Datenspeicher 16 verbunden. Abhängig von der augenblicklichen Position (Positionsbestimmungseinheit 22) und, vorzugsweise, ebenfalls abhängig von der augenblicklichen Blickrichtung (Blickrichtungsbestimmungseinheit 24) des Benutzers 10 sowie abhängig von Umgebungsereignissen (Umgebungsereignissteuerung 26) erfolgt nun in der Steuereinheit 18 die eigentliche Handlungssteuerung. Diese wird über die Multi-Media Steuereinrichtung 22 auf die Telekommunikationsempfangsvorrichtung 28 (beispielsweise Mobiltelefon) ausgegeben.

Über eine Einheit 30, die mit der Steuereinheit 18 kommuniziert, kann die für den Benutzer 10 spezifische Handlungshistorie nachverfolgt werden. Mit Hilfe der Einheit 28 ist es also möglich, dann, wenn der Benutzer 10 einen Ort innerhalb eines Bereichs, über den der Kunde 10 Informationen bzw. Unterhaltungsprogramme heruntergeladen hat, mehrfach aufsucht bzw. passiert, jeweils unterschiedliche Unterhaltungsprogramme bzw. Informationen abgespielt werden.

Mit dem erfindungsgemäßen Verfahren ist es also möglich, den Benutzer an "nicht linearen Handlungssträngen" teilhaben zu lassen, und zwar auf ganz individuelle Art und Weise. Die Erfindung ermöglicht es, dass der Benutzer Spielszenen in Realzeit erlebt. Der Benutzer bewegt sich real durch virtuelle Welten und löst durch seinen individuellen Weg oder die individuelle Reihenfolge, in der er Orte ansteuert, bestimmte Szenen aus. Auf diese Weise lassen sich auch Ereignisse in das jeweilige Szenarium einbauen, die an bestimmte Tageszeiten gebunden sind.

## Patentansprüche

1. Verfahren zur ortsabhängigen Wiedergabe von über ein Telekommunikationsnetz mittels Datenpaket-Übertragung abgerufenen individualisierten Unterhaltungsprogrammen, bei dem
- die Unterhaltungsprogramme mit für verschiedene Orte innerhalb eines Gebiets spezifischen Inhalten durch eine Telekommunikationsempfangsvorrichtung von einer Telekommunikationssendevorrichtung mittels Datenpaket-Übertragung abgerufen und in der Telekommunikationsempfangsvorrichtung gespeichert werden,
- der augenblickliche Ort der Empfangsvorrichtung innerhalb des Gebiets ermittelt wird und
- von der Telekommunikationsempfangsvorrichtung ein Unterhaltungsprogramm mit für den ermittelten, augenblicklichen Ort der Telekommunikationsempfangsvorrichtung spezifischem Inhalt ausgegeben wird.

2. Verfahren nach Anspruch 1, **dadurch gekennzeichnet, dass** die Telekommunikationsempfangsvorrichtung von der Telekommunikationssendevorrichtung mehrerer Unterhaltungsprogramme mit für mindestens einen der Orte spezifischen, untereinander verschiedenen Inhalten abruft und speichert und dass die Telekommunikationsempfangsvorrichtung dann, wenn sie sich wiederholt an demselben Ort befindet, jeweils unterschiedliche Unterhaltungsprogramme ausgibt.

3. Verfahren nach Anspruch 1 oder 2, **dadurch gekennzeichnet, dass** die Telekommunikationsempfangsvorrichtung von einer sich innerhalb des Gebietes bewegenden Person mitgeführt wird.

4. Verfahren nach Anspruch 3, **dadurch gekennzeichnet, dass** die Person die Telekommunikationsempfangsvorrichtung zum Abrufen und/oder Ausgeben der Unterhaltungsprogramme bedient.

5. Verfahren nach Anspruch 4, **dadurch gekennzeichnet, dass** die Telekommunikationsempfangsvorrichtung von der Person zum sequentiellen Ausgehen sämtlicher Unterhaltungsprogramme mit für den augenblicklichen Ort spezifischen Inhalten bedienbar ist, ohne dass die Telekommunikationsempfangsvorrichtung ortsverändert wird.

6. Verfahren nach einem der Ansprüche 1 bis 5, **dadurch gekennzeichnet, dass** als Telekommunikationsempfangsvorrichtung ein Mobiltelefon verwendet wird.

7. Verfahren nach einem der Ansprüche 1 bis 6, **dadurch gekennzeichnet, dass** die Telekommunikationsempfangsvorrichtung zur Ermittlung des augenblicklichen Orts mit einem Satteliten gestützten Ortungssystem zusammenwirkt oder zusammenarbeitet.

8. Verwendung des Verfahrens nach einem der vorhergehenden Ansprüche als Informationsquelle bei einer Stadtführung, einem Freilichtmuseumsrundgang oder dergleichen.
